Europäisches Patentamt

(19) European Patent Office

Office européen des brevets

(11) Publication number: **0 116 736**
**B1**

(12) # EUROPEAN PATENT SPECIFICATION

(45) Date of publication of patent specification: **25.02.87**

(21) Application number: **83300870.9**

(22) Date of filing: **18.02.83**

(51) Int. Cl.⁴: **A 23 K 1/18,** A 23 K 1/00

(54) **Canine biscuit containing discrete meat and/or meat by-product particles and method for making same.**

(43) Date of publication of application:
**29.08.84 Bulletin 84/35**

(45) Publication of the grant of the patent:
**25.02.87 Bulletin 87/09**

(84) Designated Contracting States:
**AT BE CH DE FR IT LI LU NL SE**

(56) References cited:
**GB-A-2 027 577**
**GB-A-2 115 265**

(73) Proprietor: **NABISCO BRANDS INC.**
**Nabisco Brands Plaza**
**Parsippany New Jersey 07054 (US)**

(72) Inventor: **Gellman, Gary**
**20 Lillian Street**
**Pamona New York 10970 (US)**
Inventor: **Erfurt, George A.**
**29 Lake Shore Drive**
**Lawrenceville New Jersey 08648 (US)**
Inventor: **Roe, James E.**
**560 Pines Lake Drive West**
**Wayne New Jersey 07470 (US)**

(74) Representative: **Thomas, Roger Tamlyn et al**
**D. Young & Co. 10 Staple Inn**
**London WC1V 7RD (GB)**

Courier Press, Leamington Spa, England.

## Description

BACKGROUND OF THE INVENTION

1. Field of the Invention

This invention relates to a method for incorporating animal protein into a biscuit dough to obtain a hard or soft, dry canine biscuit having animal protein particles which are visually apparent as discrete particles and which are distributed substantially uniformly throughout the biscuit. This invention also relates to a dry, hard or soft canine biscuit containing discrete animal protein particles. The products have enhanced palatability and enhanced eye appeal.

2. Description of the Prior Art

Dry pet foods are commonly cereal type materials having a low moisture content of less than about 15% by weight. As a result of their low moisture content, they resist mold growth and bacterial spoilage. Additionally, they can often be packed and stored in containers, such as a box, without the need for hermetic sealing and without the need for a moisture barrier. Dry pet foods typically have low palatability because of their low moisture content.

The incorporation of meat products, fish products, and poultry products into a farinaceous pet food to improve palatability and to improve nutritional values of dry pet foods, intermediate moisture products, and high moisture content pet foods (more than about 50% weight by water) is known in the art.

U.S. patent 3,946,123 discloses an aqueous suspension or broth of meat and meat by-products consisting in part or entirely of fish and flavoured cereal chunks. The meat and meat by-products that may be used include those of fowl and fish as well as that of mammals such as cattle, swine, goats, and the like. Due to the high moisture content of the product, it must be packaged in cans. In U.S. patent 4,158,706 a high moisture pet food product containing farinaceous and proteinaceous components such as meats, fish and poultry is impregnated with a preservative, such as succinic acid to enable packaging within a paper or polymer film. These high moisture content products have a high shipping weight for a given amount of nutritive value and do not provide a hard surface for the strengthening of gums and for the removal of plaque from the teeth.

The production of dry pet foods which contain proteinaceous and farinaceous material is disclosed in U.S. patent 3,962,462, 4,020,187, 4,039,689, 4,055,681, 4,145,447, 4,215,149 and 4,229,485.

In U.S. patent 3,962,462 the ingredients are first dry-blended and then water and water-containing ingredients are added until a cohesive dough is formed. A stabilizing system comprising a sugar, an edible acid, and an antimycotic provides stability within the pet food when the pet food is subjected to semi-moist conditions. The product is produced in wafer form for packaging with a semi-moist pet food. The proteinaceous material includes meat, such as the flesh of cattle, swine, sheep, poultry, and fish as well as various meals such as meat and bone meal, fish meal and the like.

In U.S. patent 4,020,187 tallow or lard is added to the water slurry of a ground mixture of meat and meat by-products to raise the resulting fat content of the mixture to at least 25%. The resulting mixture is then homogenized to liquefy and reduce the particle size and to uniformly distribute the fat content through the meat mixture. Dry farinaceous ingredients are ground and added to the homogenized meat mixture. The blended mixture is subjected to temperatures of from 225° to 325°F at a pressure of at least about 50 p.s.i. The product is expanded, cut, and dried to obtain a product having a final moisture content of from 7% to 15%. The product, it is disclosed is not externally greasy and may be packaged in ordinary paper bags or in plastic wrap.

A dry, but soft, pet food is produced in U.S. patent 4,039,689 using low temperatures and pressures. The use of the low processing temperatures, less than about 130°F, leads to the soft dry nature of the pet food, it is disclosed. Meat and meat by-products as well as dried animal by-products can be used as a protein source for the pet food in U.S. patent 4,039,689. The dried animal by-products include meat meal and bone meal.

U.S. patent 4,055,681 like U.S. patent 4,039,689 produces a soft dry pet food having a meat-like texture and appearance. Meat meal is disclosed as a protein source and fresh meat and meat by-products are used to impart palatability to the pet food.

In the production of the dry pet food products according to the processes of the above patents, the use of wet meat products causes substantial smearing or blending of the meat into the farinaceous material. It also causes bleeding of the protein colors into the farinaceous material which reduces the visual attractiveness of the product in the consumer and which reduces the product's hardness.

A hard dry pet food is produced in U.S. patent 4,145,447. High pressures, of at least about 100 p.s.i. are used to obtain a product which is hard enough to provide chew-resistance for the removal of plaque or tartar from the animal's teeth. The product is a long-lasting one which requires about 30 minutes to 2 hours for a 25lb. dog to consume. Dry components are mixed until homogeneous and the sufficient water is added to wet the product without affecting the apparent dry, free-flowing characteristics of the product. The wetted product is then compacted, at a pressure of at least 100 p.s.i. followed by heating of baking the compacted prodcut at a temperature of at least about 200°F. The product can contain air-dried, freeze-dried, or irradiated foods such as meats, fish, fish meal, cereals, fruits, vegetables, and the like. Protein fibers, such as those derived from soy protein and wheat gluten, or animal fibers, such as those derived from skin, muscles, and intestines, are optionally added to support the structure of the product. The animal fibers can be prepared by cutting, chipping, grinding, shredding, shearing or beating animal skins such as cowhide or rawhide. The high pressures used in the process of U.S. patent 4,145,447 makes the process costly. Also, the structure-supporting fibers derived from animal tissue, which are optionally used in the process of U.S. patent 4,145,447, are low in palatability. Furthermore, a product having discrete, visually apparent, meat particles is not disclosed.

U.S. patents 4,215,149 and 4,229,485 disclose processes for improving the palatability of dry pet foods by applying a coating which contains proteins derived from animals, to the surface of the pet food. In U.S. patent 4,215,149 the surface of the pet food is treated with fat and then with a phosphoric acid salt. Treatment of the surfaces of the pet food with meat flavors and animal proteins is optional. Heating of the coated pet food, it is disclosed, must be avoided.

In U.S. patent 4,229,485 a dry biscuit is coated with a continuous glazed liver coating and is then baked to less than 18% moisture by weight. The liver preferably constitutes at least about 59% by weight of the coating, exclusive of moisture. The liver coating contains farinaceous material and comminuted liver. The hard glazed coating, it is disclosed, has the visual appearance of a meat coating to enhance the product's attractiveness to pets. The dry biscuit to which the liver coating is applied are obtained by baking a combination of uncooked farinaceous material and uncooked meat or meat by-products. The use of the uncooked meat or meat by-products in the form of finely cut flakes, preferably having their largest dimension in the range of $^{15}/_{1000}$ inch to $^{250}/_{1000}$ inch, it is disclosed, is necesary for obtaining high palatability of the product. However, the use of uncooked meat or meat by-products results in blending of the protein color into the farinaceous material. Additionally, the flakes present in the biscuit are not visually because of the liver coating.

SUMMARY OF THE INVENTION

According to the present invention, there is provided a dry hard or soft canine biscuit having discrete meat and/or meat by-product particles distributed substantially uniformly throughout the biscuit.

More specifically, according to one aspect the invention provides a method for making a dry, hard or soft canine biscuit having discrete meat and/or meat by-product particles distributed substantially uniformly throughout the biscuit comprising:

a) dry blending meat and/or meat by-product particles having a moisture content of less than or equal to 35% by weight of the particles with the non-fat solids portion of a biscuit dough,

b) admixing the dry blended mixture with water to form a dough,

c) mixing the fat portion of the biscuit dough, either after or simultaneously with step (b), with said dough to form a final dough,

d) forming said final dough into pieces, and

e) baking and drying said pieces to form a dry hard or soft biscuit

wherein the water activity of said particles in step (a) is less than the water activity of a final dough obtained by admixing said non-fat solids portion, said fat portion and said water without said particles.

The invention also provides a dry hard or soft canine biscuit comprising discrete, visually apparent dehydrated meat and/or meat by-product particles distributed substantially uniformly throughout said biscuit, the remaining portion of said biscuit being substantially free of meat particle color, said biscuit having a water activity of 0.70 or less.

ADVANTAGES OF THE PREFERRED EMBODIMENTS OF THE INVENTION

The particles are visually apparent as discrete particles, do not separate from the remaining, or farinaceous portion of the biscuit during shipping, and enhance the palatability of the biscuit by providing a flavor impact. The product is highly stable and can be packaged directly into a paper board box. The method for making the dry hard or soft canine biscuit of the present ivention is economical, does not involve the use of high pressures to compact the biscuit dough as in U.S. patent 4,145,447, avoids substantial bleeding of the animal protein color into the farinaceious material, maintains particle discreteness, and achieves substantially uniform distribution of the particles throughout the biscuit.

The present invention relates to a method for making a dry hard or soft canine biscuit having enhanced palatability and enhanced eye appeal. Discrete meat and/or meat by-product particles are distributed substantially uniformly throughout the dry biscuit and are visually apparent to the consumer as discrete particles. The presence of meat particles substantially above or on the biscuit surface is kept to a minimum to reduce the opportunity for meat particle loss from physical abuse during transit. This particle distribution is accomplished by first dry-blending the meat particles with the non-fat solids portion of a biscuit dough, admixing the dry-blended mixture with water and then adding the fat portion of the biscuit dough to form a dough. Alternativley, the water and fat can be admixed simultaneously with the dry-blended mixture. Meat and/or meat by-product particle visual awareness and biscuit hardness maintenance are achieved by using particles which are inert with respect to the biscuit dough. Meat and/or meat by-product particle inertness is made possible through the use of particles: a) having a moiture content of 35% by weight or less, and b) having a water activity which is less than the water activity of the biscuit dough during mixing, if the biscuit dough ingredients were mixed without the meat and/or meat by-product particles.

## DETAILED DESCRIPTION OF PREFERRED BISCUITS OF THE INVENTION

The dry, hard or soft canine biscuit of the present invention comprises discrete, visually apparent meat and/or meat by-product particles which are uniformly distributed through the biscuit. The remaining, or non-meat and/or non-meat by-product particle portion of the biscuit is substantially free of meat particle color. The biscuits are very stable microbiologically, and can be stored without refrigeration and without a packaging barrier material such as plastic film. The hard biscuit can be in various shapes such as square, round, triangular, animal-shaped and the like. The preferred shapes being round, T-bone shape and a chop or steak-like shape. The soft biscuit can be in various shapes such as square, round, triangular, tubular, cylindrical, rectangular and the like, preferred shapes being tubular and cylinderical; the tubular shape can contain a co-extruded farinaceous filler. The biscuits can have a thickness typical of canine biscuits. A preferred thickness is about $\frac{1}{2}''$ (13 mm).

The meat and/or meat by-product particles used in the present invention, can be in the form of specs, flakes, chunks, chips, granules, and the like. The particles should be of sufficient size so as to be visually apparent to the consumer as discrete particles when in the biscuit of the present invention. Prior to incorportion into the biscuit, the meat and/or meat by-product particles should preferably have a diameter or granulation of from $\frac{1}{32}$ of an inch (0.8 mm) to $\frac{1}{2}$ inch (13 mm). The final biscuit will have particles approximately in this size range too. Mixtures of particles within this size range or particles having a given size within this range can be used.

Particle visual awareness and biscuit hardness maintenance are achieved by using meat and/or meat by-product particles which are inert with respect to the biscuit. By meat and/or meat by-product particle "inertness" is meant: a) the particle does not smear into the biscuit dough and retains its integrity through production of the final product, b) the meat and/or meat by-product particle color does not substantially bleed into the biscuit dough, and c) ingredients within the meat and/or meat by-product particles do not adversely affect the hardness and microbiological stability of the final biscuit product.

Meat and/or meat by-product particle inertness is made possible by using meat and/or meat by-product particles having: 1) a moisture content of about 35% by weight or less, and, 2) a water activity which is less than the water activity of the biscuit dough during mixing of the dough, if the biscuit dough incredients were mixed without the meat and/or meat by-product particles. The lower water activity of the meat and/or meat by-product particles sustantially prevents the flow of water and protein color from the particles to the dough during mixing of the dough ingredients and the particles. Higher moisture content and a water activity above that of the dough would cause smearing of the softer particles into the dough, thereby losing meat and/or meat by-product particle integrity. Also, higher moisture contents could create hardness reduction by the formation of steam pockets which turn into air voids upon biscuit leavening. The discreteness of the particles is locked in during drying of the dough.

Fresh meat and/or meat by-products can be dehydrated by known methods to achieve a moisture content of less than about 35% by weight. Dehydration also reduces the water activity of the meat and/or meat by-products. Generally, fresh beef has a moisture content of about 65% by weight and a water activity of about 1.0. Dehydrating the fresh meat to a moisture content of about 40% results in a water activity for the meat of about 0.8. Dehydration to about 12—20% by weight water results in a water activity for the meat of about 0.7 and lower. Biscuit doughs generally have a water activity of about 0.90 and above upon completion of mixing of the non-fat solids portion, the water, and the fat portion of the dough. Preferably, meat and/or meat by-products having a moisture content of less than or equal to about 20% by weight are used because they remain shelf stable without refrigeration prior to incorporation into the biscuit.

Microbiological stability of the meat and/or meat by-product particle ingredient is preferably achieved through a low water activity of 0.70 or less. This low water activity is preferably achieved by dehydration. However, the water activity can also be lowered by other processes known in the art. For example, to reduce the water activity, food additives conventionally used for this purpose such as glycerin, propylene, glycol, salt, corn syrup, sugar and the like can be included in the meat and/or meat by-product particles in conventional amounts.

Commercially available meats and/or meat by-products having the above low water activity can be used for the meat and/or meat by-product particle ingredient of the present invention. Microbiological stability of the meat and/or meat by-products can also be achieved even at water activities above 0.70 by the use of antimycotics together with either bacteriostats or sterilizing gases conventially used in the art for this purpose. Exemplary of the antimycotics which can be used as potassium sorbate, sorbic acid, sodium benzoate, and the like. Suitable commercially available meat products and/or meat by-products which can be used are those which are stored without refrigeration and are packaged in a film of no more than 5 g/sq. m/24 hours water vapor transfer rate. The meat and/or meat by-product particles should also be in compliance with NRC nutritional requirements such as 20% minimum protein.

The substantial absence of meat and/or meat by-product particle color bleed into the biscuit is principally due to the use of meat products wherein the color is formed as part of the protein matrix. In these meat products the protein is present in its least soluble form, namely denatured and coagulated, and therefore the color is also insoluble. Accordingly, bleeding of the meat protein color into the remaining portion of the biscuit cannot take place.

Visual awareness of the meat particles is also effected by using meat products having a dark brown denatured meat protein color. Products having a denatured meat protein color as measured by an Agtron

4

reflectance value of 10 or less contrasts excellently with typical biscuit doughs to effect visual awareness.

The term "meat" is understood to apply not only to the flesh of cattle, swine, sheep, goats, horses, whales, but also to other sources of animal protein, such as poultry and fish. The term "meat by-product" refers to those non-rendered parts of the carcasses of slaughtered animals, including but not restricted to mammals, poultry and fish, and includes constituents such as liver, kidney, heart, spleem, tongue, trimmings, lungs and skins, embraced by the term "meat by-products" in the *Official Publication*, "Official and Tentative Definitions of Feed Ingredients", published by the Association of American Feed Control Officials, Inc., p.94 (1979). The flesh of some animals, such as fish and poultry may be too light in color to provide sufficient contrast with the biscuit dough so as to enhance visual awareness of the meat particles. In this case, known food colorings can be added to the meat to enhance visual awareness. The meat particles and the meat by-product particles can be used alone or in combination. Each particle may contain both meat and meat by-products from one or more animals.

The preferred meat and/or meat by-product particles are of dehydrated cured or uncured beef, most preferably containing spices. Spiced dehydrated meat particles are highly palatable and have an appetizing odor. The preparation of dehydrated cured or uncured meat, spiced or unspiced, is well-known in the art and does not form a part of the present invention. Suitable dehydrated cured or uncured meat is commercially available and is commonly referred to as jerky, jerked beef, or jerked meat.

Commercially available, dehydrated cured or uncured meat products which contain more than 35% moisture can be dried in conventional manner to within the above moisture content range.

Known biscuit dough formulations for the preparation of dry hard canine biscuits can be used in the production of the hard biscuits of the present invention. As indicated above, these doughs generally have a water activity of about 0.90 and above upon completion of mixing of the dough ingredients. A suitable dough contains at least one farinaceous material, the predominant one being glutenous, salt, animal fat, flavorings, added vitamins and minerals, and an antioxidant such as those disclosed in U.S. patent 4,229,485 at column 5, lines 7 to 25 and 38 to 57. The hard biscuit compositions of the present invention also preferably contain at least one animal-derived proteinaceous meal such as meat meal, bone meal, and fish meal. A preferred biscuit dough for producing the hard biscuits of the present invention contains about 50 to 60% by weight wheat flour, about 5 to 10% by weight soybean meal, about 3 to 10% by weight meat and bone meal, about 1 to 5% wheat meal, about 1 to 5% animal fat preserved with BHA, about 20 to 30% by weight water, and about 2 to 5% by weight of natural flavors, vitamin and mineral preblend, and acidulant. The wheat flour can be either all hard flour or a mixture of hard and soft flours. The hard flour should be the predominant flour so as to contribute to final biscuit hardness. The relative amount of the meat/and or meat by-product particles and the biscuit dough should be such so as to result in a dried biscuit product and wherein the weight percent of the particles is about 3 to 15% by weight, preferably about 5 to 10% by weight of the final dried biscuit product.

Similarly known biscuit dough formulations for the preparation of dry soft canine biscuits can be used in the production of the soft biscuit of the present invention. As indicated above, these doughs generally have a water activity of about 0.90 and above upon completion of mixing of the dough ingredients. A suitable dough contains at least one farinaceous material, the predominant one being glutenous, salt, animal fat, flavorings, added vitamins and minerals, and an antioxidant such as those disclosed in U.S. patent 4,229,485 at column 5 lines 7 to 25 and 37 to 57, a humectant such as sugar, propylene glycol, glycerin, sorbitol, and corn syrup, and chemical leavening. The soft biscuit compositions of the present invention also preferably contain at least one animal-derived proteinaceous meal such as meat meal, bone meal, and fish meal. A preferred biscuit dough for producing the soft biscuits of the present invention contains about 40% to 50% by weight wheat flour, about 10 to 15% by weight sugar, about 5 to 15% humectant, about 3 to 10% by weight meat meal, abvout 1 to 5% chemical leavening, about 1 to 10% animal fat preserved with BHA, and about 15 to 25% by weight water, and about 2 to 5% by weight of natural flavors, and vitamin and mineral preblend. Use of the humectant is optional, but it is preferred to enhance the softness of the product and to effect less breaking force. Suitable humectants are known in the art and include glycerin, sorbitol, propylene glycol, corn syrup, and sugar. Chemical leavening, known in the art can be used. Exemplary thereof is calcium acid phosphate with sodium bicarbonate and/or ammonium bicarbonate. The relative amount of the meat and/or meat by-product particles and the biscuit dough should be such so as to result in a dried biscuit product wherein the weight percent of the particles is about 3 to 25% by weight, preferably about 5 to 20% by weight of the final dried biscuit product.

Compliance to NRC nutritional requirements is enhanced by even these low levels of 20% miniumum protein meat and/or meat by-product particle. Lower or higher levels of the meat particles can be used provided biscuit integrity is maintained, the meat particles do not extend above the surface of the biscuit so as to separate from the biscuit during shipment, the final product remains visually attractive to the consumer, and the product is economical to produce.

In producing the dry, hard or soft canine biscuit of the present invention and the meat and/or meat by-product particles are dry-blended with the solid non-fat portion of the biscuit dough. By incorporating the meat particles into the solid non-fat portion of the biscuit dough, the meat particles are distributed substantially uniformly throughout the final biscuit product. The portion of the particles at the surface of the biscuit are visually apparent as discrete particles. Particles substantially below the surface however are also of sufficient size and integrity to be visually apparent as discrete particles upon breaking the biscuit in two for example.

All mixing can be at 20—100 rpm. The dry-blending step is typically at room temperature for a period of time of about 3 minutes to about 10 minutes so as to obtain uniform mixture of the meat and/or meat by-product particles and non-fat protion of the biscuit dough. The dry-blend mixture is then mixed with the hot water to form a first stage dough. This methodology minimizes the occurrence of meat and/or meat by-product particles substantially above and on the final biscuit surface. As a result, the opportunity for meat and/or meat by-product particle loss from physical abuse during transit is reduced. The water which is admixed with the dry-blended mixture is typically at a temperature of about 65°F (18°C) to about 150°F (66°C). The hot water (and optional humectant in the case of a soft biscuit) is added with mixing, over a period of time of about 3 minutes to about 10 minutes to form the first stage dough. Then, the fat portion of the biscuit dough is admixed with the first stage dough to form the final stage dough. The fat portion is added at a temperature at which it is at least fluid, typically at about 100°F (37°C) to about 150°F (66°C). The fat portion is mixed for a periodd of time which is sufficient to form a dough whose homogeneity is visually apparent. A typical final mixing time is about 3 minutes to about 8 minutes.

Formation of the dough is achieved at about atmospheric pressure with mixing of the components being conveniently achieved in an upright sigma blade mixer or other baker-type mixers. The various ingredients can be added over a period of time or in a one-slot manner according to the above order of addition. However, melted fat and water may be added simultaneously and mixed 6—12 minutes.

When the product is to be a hard biscuit the subsequent stages are as follows.

The dough is then formed into pieces by machining on a rotary molder with specific die shapes. The dough can also be formed into pieces by sheeting followed by either a vertical or rotary cutter or by a rotary molder. Hardness of the final biscuit is enhanced by sheeting the dough prior to cutting or molding. Suitable die and cutter shapes are those which result in a round, square, triangular, T-bone or chop shaped biscuit product and the like. The forming is accomplished at conventional temperatures of ambient to 100°F (43°C) and pressures of less than 75 p.s.i. (gauge) ($5 \times 10^5 \text{N.m}^{-2}$) used with a rotary molder, a vertical cutter or rotary cutter.

As used herein the term vertical cutter means reciprocating cutter.

The formed pieces are then baked, followed by drying, to achieve a shelf stable product without the need for moisture barrier protection. Baking and drying temperatures and times are those conventionally used in the production of a hard, dry canine biscuit. The pieces are dried to obtain a biscuit having a water activity of 0.70 or less. Typical baking temperatures and times are about 300°F (149°C) to about an average of 475°F (246°C) for about 25 minutes to about 8 minutes. Drying conditions are typically about 200°F (93°C) to about 325°F (163°C) for about 25 minutes to about 12 minutes in a forced air dryer. On a weight basis, the moisture content of the final biscuit product is less than or equal to about 15% by weight and preferably about 10 to 12% by weight of the final biscuit at 70% relative humidity.

While typically adding meat to a biscuit softens it, the final dried hard biscuits of the present invention should be sufficiently hard to stimulate the jaw bones and clean the teeth of canines. The hardness of the final biscuit of the present invention as measured in a cracking test on a Dillon dynamometer should be about 30 to about 50 lbs. (13.6 to 22.7 Kg) for a ½″ (13 mm) thick sample using a pinpoint tester having a ³⁄₃₂″ (2.4 mm) diameter tip. The tip has a concave bottom with a maximum depth of ¹⁄₁₆″ (1.6 mm). In this test, the hardness reading in pounds is linearly proportional to the sample thickness. Thus, a ¼″ (6 mm) thick sample should have a hardness of about 15 to 25 lbs. (6.8 to 11 Kg).

On the other hand, when the product is to be a soft biscuit the treatment of the dough is as follows.

The dough is formed into pieces by horizontal or vertical extrusion followed by cutting. The cutting is preferably substantially perpendicular to the direction of flow of the extruded dough. Thus, when horizontal extrusion is utilized, the extruded dough is preferably cut substantially perpendicular to the stop surface of the oven band. When vertical extrusion is used, the extruded dough is cut preferably substantially parallel to the top surface of the oven band.

Suitable die and cutter shapes are those which result in a round, square, rectangular, triangular, tubular, or cylindrically shaped biscuit product and the like. The forming is accomplished at conventional temperatures of ambient to 110°F (43°C) and pressures of less than 75 p.s.i. (gauge) ($5 \times 10^5 \text{N.m}^{-2}$) used with a horizontal or vertical extruder.

The formed pieces are then baked, followed by drying, to achieve a shelf stable product without the need for moisture barrier protection. Baking and drying temperatures and times are those conventionally used in the production of a soft, dry canine biscuit. The pieces are dried to obtain a biscuit having a water activity of 0.70 or less. Typical baking temperatures and times are about 300°F (149°C) to about an average of 475°F (246°C) for about 20 minutes to about 6 minutes. Drying conditions are typically about 200°F (93°C) to about 325°F (163°C) for about 25 minutes to about 12 minutes in a forced air dryer. One a weight basis, the moisture content of the final biscuit product is less than or equal to about 15% by weight and preferably about 10 to 12% by weight of the final biscuit at 70% relative humidity.

The hardness of the final soft biscuit of the present invention as measured in a cracking test on a Dillon dynamometer should be about 5 to about 15 lbs. (2.3 to 6.8 Kg) for a ½″ (13 mm) sample using a pinpoint tester having a ³⁄₃₂″ (2.4 mm) diameter tip. The tip has a concave bottom with a maximum depth of ¹⁄₁₆″ (1.6 mm). In this test, the hardness reading in pounds is linearly proportional to the sample thickness. Thus a ¼″ (6 mm) thick sample should have a hardness of about 3 to 8 lbs. (1.4 to 3.6 Kg).

0 116 736

The present invention is further illustrated in the following example wherein all percentages, parts, and proportions are by weight and all temperatures are in °F unless otherwise indicated:

Example 1

In this example, spiced dehydrated cured beef granules having a moisture content of about 15% by weight, a gratulation between 1/32 of an inch (0.8 mm) and 1/2 inch (13 mm), and having a dark brown denatured meat protein color of Agtron reflectance value of 10 or less are used. The spiced dehydrated cured meat granules are obtained by granulating dehydrated cured meat having the composition:

| Dehydrated Cured Meat | Pounds | (Kg) |
|---|---|---|
| Meat By-Products | 650 | (295) |
| Meat | 268 | (122) |
| Natural Flavors | 1 | (0.45) |
| Spices | 29 | (13.2) |
| Cure (Sodium Nitrite) | 1 | (0.45) |
| Potassium Sorbate | 0.5 | (0.23) |
| | 949.5 pounds | (431 Kg) |

Then, 75 pounds (34 Kg) of the spiced dehydrated cured meat granules are combined with the non-fat solids portion of a biscuit dough, the fat portion of the biscuit dough and water to form a dough in accordance with the process of the present invention. The ingriedients, amounts, and the process for making the biscuits are:

| Biscuit and Meat Chips | Pounds | (Kg) |
|---|---|---|
| Wheat Flour | 940 | (427) |
| Soybean Meal | 135 | (61) |
| Dehydrated Cured Meat | 75 | (34) |
| Meat and Bone Meal | 100 | (45) |
| Wheat Meal | 40 | (18) |
| Animal Fat Preserved with BHA | 32 | (14.5) |
| Natural Flavors | 17 | (7.7) |
| Vitamin and Mineral Preblend | 25 | (11) |
| Acidulant | 4 | (1.8) |
| Salt | 10 | (4.5) |
| Water | 490 | (222) |
| | 1868 pounds | (848 Kg) |

The dehydrated cured meat is dry-blended with the solid non-fat portion of the biscuit dough in an upright sigma blade mixer at 20 rpm for 10 minutes. Then, the 490 pounds (222 Kg) of water, at a temperature of 150°F (66°C) is added together with 140°F (60°C) fat to the preblend and mixed for 6 minutes to form the dough. The dough is then machined on a rotary molder having a die engraved to a depth of 0.415 inch (10.5

7

mm) for the formation of apoproximately $\frac{1}{2}''$ (13 mm) thick round, T-bone and chop shapes. The formed pieces are then baked in a band oven for 9 minutes followed by drying at 250°F (121°C) for 20 minutes in a band dryer to achieve a dry, hard shelf stable product. The baking temperatures in the band oven are:

Band Oven

| Baking Temperatures °F (°C) | | Zone |
|---|---|---|
| 530 | (277) | 1 |
| 530 | (277) | 2 |
| 550 | (288) | 3 |
| 540 | (282) | 4 |
| 400 | (204) | 5 |
| 520 | (271) | 6 |
| Off | | 7 |
| Off | | 8 |
| Off | | 9 |

The product is dump-packed into a carton without the need for moisture barrier protection.

Hardness tests on the product using a Dillon dynamometer as described above resulted in hardness readings in the range of 30—50 lbs. (13.6—22.7 Kg).

The product and biscuits prepared in the same manner except for the inclusion of the meat granules were fed to dogs in 35 tests. The number of dogs in each test ranged from 11 to 32. The feedings were for 3 consecutive days in a split plate test for preference. The biscuits were fed as a treat 4 to 5 hours after the dog's main meal. The main meal supplied 100% of the dogs calorie demand. The biscuit containing the meat granules was preferred up to 8:1 at a statistically significant prefernce level.

Example 2

In this example, spiced dehydrated cured beef granules having a moisture content of about 15% by weight, a granulation between $\frac{1}{32}$ of an inch (0.8 mm) and $\frac{1}{2}$ of an inch (13 mm), and having a dark brown denatured meat protein color of Agtron reflectance value 10 or less are used. The spiced dehydrated cured meat granules are obtained by granulating dehydrated cured meat having the composition:

| Dehydrated Cured Meats | Pounds | (Kg) |
|---|---|---|
| Meat By-Products | 650 | (295) |
| Meat | 268 | (122) |
| Natural Flavors | 1 | (0.45) |
| Spices | 29 | (13) |
| Cure (Sodium Nitrite) | 1 | (0.45) |
| Potassium Sorbate | 0.5 | (0.23) |
| | 949.5 | (431) |

Then, 150 pounds (68 Kg) of the spiced dehydrated cured meat granules are combined with the non-fat solids portion of a soft biscuit dough, the fat portion of the soft biscuit dough and water plus humectant to form a dough in accordance with the process of the present invention. The ingredients, amounts, and the process for making biscuits are:

| Biscuit and Meat chips | Pounds | (Kg) |
|---|---|---|
| Wheat Flour (soft flour of about 9% by weight protein) | 400 | (182) |
| Sugar | 117 | (53) |
| Glycerin (humectant) | 100 | (45) |
| Dehydrated Cured Meat | 150 | (68) |
| Skim Milk Powder | 16 | (7.3) |
| Meat Meal | 36 | (16) |
| Chemical Leavening | 17 | (7.7) |
| Salt | 4 | (1.8) |
| Animal Fat Preserved with BHA | 75 | (34) |
| Natural Flavors | 33 | (15) |
| Vitamin and Mineral Preblend | 18 | (8.2) |
| Color | 1 | (0.45) |
| Water | 200 | (91) |
| | 1167 pounds | (530 Kg.) |

The dehydrated cured meat is dry-blended with the solid non-fat portion of the biscuit dough in an upright sigma blade mixer at 20 rpm for 10 minutes. Then the 200 pounds (91 Kg) of water, at a temperature of 150°F (66°C) plus the 100 lbs. (45 Kg) of glycerin at ambient temperature are added together with 140°F (60°C) fat to the preblend and mixed for 6 minutes to form the dough. The dough is then machined on a horizontal extruder through dies measuring ⅜" (9.5 mm) in diameter followed by vertical cutting into 1 ¼" (27 mm) length cylinders. The formed pieces are then baked in a band oven for 8 minutes followed by drying at 250°F (121°C) for 20 minutes in a band dryer to achieve a dry, soft shelf stable product having a Dillon dynamometer hardness reading of about 4 to 11 lbs. (1.8 to 5 Kg) for the ⅜" (9.5 mm) thick sample. The baking temperatures in the band oven are:

| Band Oven Baking Temperatures °F (°C) | Zone |
|---|---|
| 530 (277) | 1 |
| 530 (277) | 2 |
| 550 (288) | 3 |
| 300 (149) | 4 |
| 300 (149) | 5 |
| 300 (149) | 6 |
| Off | 7 |
| Off | 8 |
| Off | 9 |

**0 116 736**

The product is dump-packed into a carton without the need for moisture barrier protection.

The hardness tests on the product are performed using a Dillon dynamometer as described above.

**Claims**

1. A method for making a dry, hard or soft canine biscuit having discrete meat and/or meat by-product particles distributed substantially uniformly throughout the biscuit comprising:

a) dry blending meat and/or meat by-product particles having a moisture content of less than or equal to 35% by weight of the particles with the non-fat solids portion of a biscuit dough,

b) admixing the dry blended mixture with water to form a dough,

c) mixing the fat portion of the biscuit dough, either after or simultaneously with step (b), with said dough to form a final dough,

d) forming said final dough into pieces, and

e) baking and drying said pieces to form a dry hard or soft biscuit

wherein the water activity of said particles in step (a) is less than the water activity of a final dough obtained by admixing said non-fat solids portion, said fat portion and said water without said particles.

2. A method as claimed in claim 1 wherein said water and said fat portion in steps (b) and (c) are added simultaneously to the dry blended mixture of step (a).

3. A method as claimed in claim 1 or 2 wherein the particles of step (a) are shelf stable meat particles.

4. A method as claimed in any preceding claim wherein the particles of step (a) have a moisture content of less than or equal to about 20% by weight of the particles.

5. A method as claimed in any preceding claim wherein said pieces are dried to a moisture content of 10 to 12% by weight of the biscuit.

6. A method as claimed in any preceding claim wherein said biscuit is a hard biscuit and has a hardness equivalent to a reading of 30—50 lbs. (13.6—22.7 Kg) for a biscuit having a thickness of about $\frac{1}{2}''$ (13mm) measured on a Dillon dynamometer having a pinpoint tester with a $\frac{3}{32}''$ (2.4 mm) diameter tip having a concave bottom with a maximum depth of $\frac{1}{16}''$ (1.6 mm).

7. A method as claimed in any one of claims 1—5 wherein said biscuit is a soft biscuit and has a hardness equivalent to a reading of 5—15 lbs. (2.3—6.8 Kg) for a biscuit having a thickness of about $\frac{1}{2}''$ (13mm) measured on a Dillon dynamometer having a pinpoint tester with a $\frac{3}{32}''$ (2.4 mm) diameter tip having a concave bottom with a maximum depth of $\frac{1}{16}''$ (1.6 mm).

8. A method as claimed in any preceding claim wherein said particles have a granulation of between $\frac{1}{32}$ of an inch (0.8 mm) and $\frac{1}{2}$ inch (13 mm).

9. A method as claimed in any preceding claim wherein said particles comprise spiced dehydrated meat particles.

10. A method as claimed in any preceding claim wherein said particles have a dark brown denatured meat protein color of Agtron reflectance value of 10 or less.

11. A method as claimed in any preceding claim wherein said particles are spiced, dehydrated, cured meat granules.

12. A method as claimed in any preceding claim wherein said biscuit is a hard biscuit and the amount of said particles in the biscuit is from 3% to 15% by weight of the biscuit.

13. A method as claimed in any one of claims 1—11 wherein said biscuit is a soft biscuit and the amount of said particles in the biscuit is from 3% to 25% by weight of the biscuit.

14. A method as claimed in any preceding claim wherein the meat particles of step (a) have a water activity of 0.70 or less.

15. A method as claimed in any preceding claim wherein the water which is admixed with the dry blended mixture is at a temperature of 65°F (18°C) to 150°F (66°C) and wherein the amount of said water is sufficient to form a dough.

16. A method as claimed in claim 15, wherein the fat portion of the biscuit dough is added at a temperature of 100°F (38°C) to 150°F (66°C).

17. A method as claimed in claim 16 wherein said dry blending is for a period of time of 3 minutes to 10 minutes, the dry blended mixture is mixed with water for a period of time of 3 minutes to 10 minutes, and wherein said mixing of the fat portion is for a period of time of 3 minutes to 8 minutes.

18. A method as claimed in any preceding claim wherein the biscuit is a hard biscuit and said forming of the final dough into pieces is on a rotary molder.

19. A method as claimed in any one of claims 1—17 wherein the biscuit is a hard biscuit and said pieces are formed by sheeting the final dough followed by moulding in a rotary molder.

20. A method as claimed in any one of claims 1—17 wherein the biscuit is a hard biscuit and said pieces are formed by sheeting said final dough followed by cutting with a vertical cutter or a rotary cutter.

21. A method as claimed in any one of claims 1—17 wherein the biscuit is a soft biscuit and said forming of said final dough into pieces is on a horizontal extruder followed by cutting.

22. A method as claimed in any one of claims 1—17 wherein the biscuit is a soft biscuit and said pieces are formed by vertical extruding followed by cutting.

23. A method as claimed in claim 21 or 22 wherein said pieces are cut substantially perpendicular to the direction of the flow of the extruded dough.

10

## 0 116 736

24. A method as claimed in any preceding claim wherein said pieces are dried to obtain a biscuit having a water activity of 0.70 or less.

25. A method as claimed in claim 24 wherein the water activity of said biscuit dough is at least 0.90.

26. A method as claimed in claim 24 or 25 wherein said particles of step (a) are shelf stable.

27. A method as claimed in claim 25, wherein the biscuit is a hard biscuit and the amount of said particles in the biscuit is from 3% to 15% by weight of the biscuit.

28. A method as claimed in claim 25, wherein said biscuit is a soft biscuit and the amount of said particles in the biscuit is from 3% to 25% by weight of the biscuit.

29. A method as claimed in claim 24, 25, 26 or 28, wherein the biscuit is a soft biscuit and wherein a humectant and said water are admixed with said dry blended mixture to form said dough of step (b).

30. A method as claimed in claim 25 or 29, wherein said water and said fat portion in steps (b) and (c) are added simultaneously to the dry blended mixture of step (a).

31. A method as claimed in any one of claims 24—30, wherein said particles have a protein content of at least 20% by weight, said protein being denatured.

32. A method as claimed in any preceding claim wherein the dry, hard or soft canine biscuit has meat and/or meat by-product particles which are visually apparent as discrete particles.

33. A method as claimed in any preceding claims, wherein said final dough is formed at a pressure of less than 75 psig (5 × 10⁵N.m⁻²) and a temperature of up to 110°F (43°C).

34. A dry hard or soft canine biscuit comprising discrete, visually apparent dehydrated meat and/or meat by-product particles distributed substantially uniformly throughout said biscuit, the remaining portion of said biscuit being substantially free of meat particle color, said biscuit having a water activity of 0.70 or less.

35. A canine biscuit as claimed in claim 34 wherein said particles are spiced, cured dehydrated meat particles.

36. A canine biscuit as claimed in claim 34 or 35 wherein the biscuit is a hard biscuit and the weight per cent of said particles is from 3% to 15% by weight of the biscuit.

37. A canine biscuit as claimed in claim 34 or 35 wherein the biscuit is of a soft biscuit and the weight per cent of said particles is from 3% to 25% by weight of the biscuit.

38. A canine biscuit as claimed in any one of claims 34, 35 or 37 wherein the biscuit is a soft biscuit which is cylindrically shaped.

39. A canine biscuit as claimed in any one of claims 34—38 wherein said particles have a granulation of from 1/32 of an inch (0.8 mm) to ½ inch (13 mm).

**Patentansprüche**

1. Verfahren zur Herstellung eines trockenen, harten oder weichen Hundekekses mit voneinander getrennten, im wesentlichen gleichmäßig im Keks verteilten Teilchen aus Fleisch und/oder Fleischnebenprodukten, umfassend:

a) Trockenmischen von Fleisch und/oder Fleischnebenprodukten mit einem Feuchtigkeitsgehalt von weniger als oder von 35 Gew.% der Teilchen mit dem fettfreien Feststoffanteil eines Keksteiges.

b) Mischen der trockengemischten Mischung mit Wasser zur Herstellung eines Teiges,

c) Mischen des Fettanteiles des Keksteiges, entweder nach oder gleichzeitig mit Schritt (b), mit dem genannten Teig zur Herstellung eines fertigen Teiges,

d) Formen des genannten fertigen Teiges zu Stücken, und

e) Backen und Trocknen der genannten Stücke zur Herstellung eines trockenen harten oder weichen Kekses, dadurch gekennzeichnet, daß die Wasseraktivität der genannten Teilchen im Schritt (a) geringer ist als die Wasseraktivität eines fertigen Teiges hergestellt durch Mischen des genannten fettfreien Feststoffanteils und des Wassers ohne die genannten Teilchen.

2. Verfahren nach Anspruch 1, dadurch gekennzeichnet, daß das Wasser und der Fettanteil in den Schritten (b) und (c) gleichzeitig der trockengemischten Mischung des Schrittes (a) beigemischt werden.

3. Verfahren nach Anspruch 1 oder 2, dadurch gekennzeichnet, daß die Teilchen des Schrittes (a) lagerbeständige Fleischteilchen sind.

4. Verfahren nach einem der vorhergehenden Ansprüche, dadurch gekennzeichnet, daß die Teilchen des Schrittes (a) einen Feuchtigkeitsgehalt von weniger als oder von ungefähr 20 Gew.% der Teilchen haben.

5. Verfahren nach einem der vorhergehenden Ansprüche, dadurch gekennzeichnet, daß die genannten Stücke auf einen Feuchtigkeitsgehalt von 10 bis 12 Gew.% des Kekses getrocknet werden.

6. Verfahren nach einem der vorhergehenden Ansprüche, dadurch gekennzeichnet, daß das genannte Keks ein hartes Keks ist und eine Härte entsprechend einer Ablesung von 30 bis 50 lbs. (13,6 bis 22,7 kg) bei einem Keks mit einer Dicke von ungefähr ½" (13 mm) hat, gemessen auf einem Dillon-Dynamometer mit einem Nadelprüfer, der eine Spitze mit einem Durchmesser von 3/32" (2,4 mm) und einen konkaven Boden mit einer maximalen Tiefe von 1/16" (1,6 mm) hat.

7. Verfahren nach einem der Ansprüche 1 bis 5, dadurch gekennzeichnet, daß das genannte Keks ein weiches Keks ist und eine Härte entsprechend einer Ablesung von 5 bis 15 lbs. (2,3 bis 6,8 kg) bei einem Keks mit einer Dicke von ungefähr $\frac{1}{2}''$ (13 mm) hat, gemessen auf einem Dillon-Dynamometer mit einem Nadelprüfer mit einer Spitze mit einem Durchmesser von $\frac{3}{32}''$ (2,4 mm) und einem konkaven Boden mit einer maximalen Tiefe von $\frac{1}{16}''$ (1,6 mm).

8. Verfahren nach einem der vorhergehenden Ansprüche, dadurch gekennzeichnet, daß die genannten Teilchen eine Korngröße zwischen $\frac{1}{32}$ Zoll (0,8 mm) und $\frac{1}{2}$ Zoll (13 mm) haben.

9. Verfahren nach einem der vorhergehenden Ansprüche, dadurch gekennzeichnet, daß die genannten Teilchen gewürzte dehydratisierte Fleischteilchen umfassen.

10. Verfahren nach einem der vorhergehenden Ansprüche, dadurch gekennzeichnet, daß die genannten Teilchen eine dunkelbraune denaturierte Fleischproteinfarbe mit einem Agtron-Reflexionswert von 10 oder weniger haben.

11. Verfahren nach einem der vorhergehenden Ansprüche, dadurch gekennzeichnet, daß die genannten Teilchen gewürzte, dehydratisierte, haltbargemachte Fleischkörnchen sind.

12. Verfahren nach einem der vorhergehenden Ansprüche, dadurch gekennzeichnet, daß das genannte Keks ein hartes Keks ist und die Menge der genannten Teilchen im Keks 3 bis 15 Gew.% des Kekses beträgt.

13. Verfahren nach einem der Ansprüche 1 bis 11, dadurch gekennzeichnet, daß das genannte Keks ein weiches Keks ist und die Menge der genannten Teilchen im Keks 3 bis 25 Gew.% des Kekses beträgt.

14. Verfahren nach einem der vorhergehenden Ansprüche, dadurch gekennzeichnet, daß die Fleischteilchen des Schrittes (a) eine Wasseraktivität von 0,70 oder weniger haben.

15. Verfahren nach einem der vorhergehenden Ansprüche, dadurch gekennzeichnet, daß das Wasser, das mit der trockengemischten Mischung gemischt wird, eine Temperatur von 65°F (18°C) bis 150°F (66°C) hat, und daß die Menge des genannten Wassers zur Herstellung eines Teiges ausreicht.

16. Verfahren nach Anspruch 15, dadurch gekennzeichnet, daß der Fettanteil des Keksteiges bei einer Temperatur von 100°F (38°C) bis 150°F (66°C) beigemischt wird.

17. Verfahren nach Anspruch 16, dadurch gekennzeichnet, daß das genannte Trockenmischen über einen Zeitraum von 3 bis 10 Minuten erfolgt, die trockengemischte Mischung über einen Zeitraum von 3 bis 10 Minuten mit Wasser gemischt wird, und daß das genannte Beimischen des Fettanteils über einen Zeitraum von 3 bis 8 Minuten erfolgt.

18. Verfahren nach einem der vorhergehenden Ansprüche, dadurch gekennzeichnet, daß das Keks ein hartes Keks ist und das genannte Formen des fertigen Teiges zu Stücken auf einem Rotationsformer erfolgt.

19. Verfahren nach einem der Ansprüche 1 bis 17, dadurch gekennzeichnet, daß das Keks ein hartes Keks ist und die genannten Stücke geformt werden, indem der fertige Teig ausgewalzt und dann in einem rotationsformer geformt wird.

20. Verfahren nach einem der Ansprüche 1 bis 17, dadurch gekennzeichnet, daß das Keks ein hartes Keks ist und die genannten Stücke durch Auswalzen des genannten fertigen Teiges geformt und dann mit einem Vertikalschneider oder einem Rotationsschneider geschnitten werden.

21. Verfahren nach einem der Ansprüche 1 bis 17, dadurch gekennzeichnet, daß das Keks ein weiches Keks ist und das genannte Formen des genannten fertigen Teiges zu Stücken auf einer Horizontalpresse mit darauffolgendem Schneiden erfolgt.

22. Verfahren nach einem der Ansprüche 1 bis 17, dadurch gekennzeichnet, daß das Keks ein weiches Keks ist und die genannten Stücke durch vertikales Pressen und darauffolgendes Schneiden erfolgt.

23. Verfahren nach einem der Ansprüche 21 oder 22, dadurch gekennzeichnet, daß die genannten Stücke im wesentlichen senkrecht zur Fließrichtung des gepreßten Teiges geschnitten werden.

24. Verfahren nach einem der vorhergehenden Ansprüche, dadurch gekennzeichnet, daß die genannten Stücke getrocknet werden, sodaß man ein Keks mit einer Wasseraktivität von 0,70 oder weniger erhält.

25. Verfahren nach Anspruch 24, dadurch gekennzeichnet, daß die Wasseraktivität des genannten Keksteiges mindestens 0,90 beträgt.

26. Verfahren nach Anspruch 24 oder 25, dadurch gekennzeichnet, daß die genannten Teilchen des Schrittes (a) lagerbeständig sind.

27. Verfahren nach Anspruch 25, dadurch gekennzeichnet, daß das Keks ein hartes Keks ist und die Menge der genannten Teilchen im Keks 3 bis 15 Gew.% des Kekses beträgt.

28. Verfahren nach Anspruch 25, dadurch gekennzeichnet, daß das Keks ein weiches Keks ist und die Menge der genannten Teilchen im Keks 3 bis 25 Gew.% des Kekses beträgt.

29. Verfahren nach Anspruch 24, 25, 26 oder 28, dadurch gekennzeichnet, daß das Keks ein weiches Keks ist, und daß ein Feuchthaltemittel und das genannte Wasser mit der genannten trockengemischten Mischung zur Herstellung des genannten Teiges des Schrittes (b) gemischt werden.

30. Verfahren nach Anspruch 25 oder 29, dadurch gekennzeichnet, daß das genannte Wasser und der genannte Fettanteil in den Schritten (b) und (c) der trockengemischten Mischung des Schrittes (a) gleichzeitig beigemischt werden.

31. Verfahren nach einem der Ansprüche 24 bis 30, dadurch gekennzeichnet, daß die genannten Teilchen einen Proteingehalt von mindestens 20 Gew.% haben, wobei das genannte Protein denaturiert ist.

32. Verfahren nach einem der vorhergehenden Ansprüche, dadurch gekennzeichnet, daß das trockene, harte oder weiche Hundekeks Teilchen aus Fleisch und/oder Fleischnebenprodukten hat, die als getrennte Teilchen sichtbar sind.

**0 116 736**

33. Verfahren nach einem der vorhergehenden Ansprüche, dadurch gekennzeichnet, daß der genannte fertige Teig bei einem Druck von wenigher als 75 psig (5 × 10⁵N.m⁻²) und einer Temperatur von bis zu 110°F (43°C) geformt wird.

34. Trockenes, hartes oder weiches Hundekeks mit voneinander getrennten, sichtbaren, dehydratisierten, im wesentlichen gleichmäßig im genannten Keks verteilten Teilchen aus Fleisch und/oder Fleischnebenprodukten, wobei der restliche Teil des genannten Kekses im wesentlichen frei von Fleischteilchenfarbe ist und das genannte Keks eine Wasseraktivität von 0,70 oder weniger hat.

35. Hundekeks nach Anspruch 34, dadurch gekennzeichnet, daß die genannten Teilchen gewürzte haltbargemachte, dehydratisierte Fleischteilchen sind.

36. Hundekeks nach Anspruch 34 oder 35, dadurch gekennzeichnet, daß das Keks ein hartes Keks ist und die Gewichtsprozente der genannten Teilchen 3 bis 15 Gew.% des Kekses betragen.

37. Hundekeks nach Anspruch 34 oder 35, dadurch gekennzeichnet, daß das Keks ein weiches Keks ist und die Gewichtsprozente der genannten Teilchen 3 bis 25 Gew.% des Kekses betragen.

38. Hundekeks nach einem Ansprüche 34, 35 oder 37, dadurch gekennzeichnet, daß das Keks ein weiches zylindrisch geformtes Keks ist.

39. Hundekeks nach einem der Ansprüche 34 bis 38, dadurch gekennzeichnet, daß die genannten Teilchen eine Korngröße von ⅟₃₂ Zoll (0,8 mm) bis ½ Zoll (13 mm) haben.

## Revendications

1. Un procédé pour préparer un biscuit sec, dur ou tendre pour chiens avec des particules discrètes de viande et/ou de sous-produits de la viande distribuées essentiellement uniformément dans le biscuit, comprenant:

a) le mélange à sec de particules de viande et/ou de sous-produits de la viande ayant une teneur en humidité inférieure ou égale à 35% du poids des particules avec la portion non grasse des matières solides d'une pâte pour biscuit,

b) le mélange du mélange mélangé à sec avec de l'eau pour former une pâte,

c) le mélange de la portion de graisse de la pâte pour biscuit soit après le stade (b), soit simultanément avec lui, avec ladite pâte pour former une pâte finale,

d) le façonnage de ladite pâte finale en morceaux, et

e) la cuisson et le séchange desdits morceaux pour former un biscuit sec, dur ou tendre,

dans lequel l'activité hydrique desdites particules dans le stade (a) est inférieure à l'activité hydrique d'une pâte finale obtenue par mélange de ladite portion non grasse des matières solides, de ladite portion de graisse et de ladite eau sans lesdites particules.

2. Un procédé comme revendiqué dans la revendication 1 dans lequel ladite eau et ladite portion de graisse dans les stades (b) et (c) sont ajoutées simultanément au mélange mélangé à sec du stade (a).

3. Un procédé comme revendiqué dans la revendication 1 ou 2 dans lequel les particules du stade (a) sont des particules de viande stables au stockage.

4. Un procédé comme revendiqué dans l'une quelconque des revendications précédentes dans lequel les particules du stade (a) ont une teneur en humidité inférieure ou égale à environ 20 % par rapport au poids des particules.

5. Un procédé comme revendiqué dans l'une quelconque des revendications précédentes dans lequel lesdits morceaux sont séchés à un taux d'humidité de 10 à 12 % du poids du biscuit.

6. Un procédé comme revendiqué dans l'une quelconque des revendications précédentes dans lequel ledit biscuit est un biscuit dur et a une dureté équivalente à une valeur de 30—50 lb (13,6—22,7 kg) pour un biscuit ayant une épaisseur d'environ ½" (13 mm) mesurée avec un dynamomètre Dillon ayant un testeur à aiguille avec une pointe de ³⁄₃₂" (2,4 mm) de diamètre ayant un fond concave avec une profondeur maximale de ⅟₁₆" (1,6 mm).

7. Un procédé comme revendiqué dans l'une quelconque des revendications 1 à 5 dans lequel ledit biscuit est un biscuit tendre et a une dureté équivalente à une valeur de 5—15 lb (2,3—6,8 kg) pour un biscuit ayant une épaisseur d'environ ½" (13 mm) mesurée avec un dynamomètre Dillon ayant un testeur à aiguille avec une pointe de ³⁄₃₂" (2,4 mm) de diamètre ayant un fond concave avec une profondeur maximale de ⅟₁₆" (1,6 mm).

8. Un procédé comme revendiqué dans l'une quelconque des revendications précédentes dans lequel lesdites particules ont une granulométrie entre ⅟₃₂ inch (0,8 mm) et ½ inch (13 mm).

9. Un procédé comme revendiqué dans l'une quelconque des revendications précédentes dans lequel lesdites particules comprennant des particules de viande déshydratée épicée.

10. Un procédé comme revendiqué dans l'une quelconque des revendications précédentes dans lequel lesdites particules ont une couleur de protéine de viande dénaturée brun foncé ayant une valeur du pouvoir réflecteur Agtron de 10 ou moins.

11. Un procédé comme revendiqué dans l'une quelconque des revendications précédentes dans lequel lesdites particules sont des granules de viande séchée déshydratée et épicée.

12. Un procédé comme revendiqué dans l'une quelconque des revendications précédentes dans lequel ledit biscuit est un biscuit dur et la quantité desdites particules dans le biscuit est de 3% à 15% du poids du biscuit.

13

13. Un procédé comme revendiqué dans l'une quelconque des revendications 1 à 11 dans lequel ledit biscuit est un biscuit tendre et la quantité desdites particules dans le biscuit est de 3% à 25% du poids du biscuit.

14. Un procédé comme revendiqué dans l'une quelconque des revendications précédentes dans lequel les particules de viande du stade (a) ont une activité hydrique de 0,70 ou moins.

15. Un procédé comme revendiqué dans l'une quelconque des revendications précédentes dans lequel l'eau que l'on mélange avec le mélange mélangé à sec est à une température de 65°F (18°C) à 150°F (66°C) et dans lequel la quantité de ladite eau est suffisante pour former une pâte.

16. Un procédé comme revendiqué dans la revendication 15 dans lequel ladite portion de graisse de la pâte pour biscuit est ajoutée à une température de 100°F (38°C) à 150°F (66°C).

17. Un procédé comme revendiqué dans la revendication 16 dans lequel ledit mélange à sec est effectué pendant une période de 3 minutes à 10 minutes, le mélange mélangé à sec est mélangé avec de l'eau pendant une période de 3 minutes à 10 minutes et ledit mélange de la portion de graisse est effectué pendant une périod de 3 minutes à 8 minutes.

18. Un procédé comme revendiqué dans l'une quelconque des revendications précédentes dans lequel le biscuit est un biscuit dur et ledit façonnage de la pâte finale en morceaux est effectué avec une machine à mouler rotative.

19. Un procédé comme revendiqué dans l'une quelconque des revendications 1 à 17 dans lequel le biscuit est un biscuit dur et lesdits morceaux sont formés par façonnage en feuille de la pâte finale puis moulage dans une machine à mouler rotative.

20. Un procédé comme revendiqué dans l'une quelconque des revendications 1 à 17 dans lequel le biscuit est un biscuit dur et lesdits morceaux sont formés par façonnage en feuille de la dite pâte finale puis découpage avec une coupeuse verticale ou une roue à couteaux.

21. Un procédé comme revendiqué dans l'une quelconque des revendications 1 à 17 dans lequel le biscuit est un biscuit tendre et ledit façonnage de ladite pâte finale en morceaux est effectué avec une extrudeuse horizontale et est suivi d'un découpage.

22. Un procédé comme revendiqué dans l'une quelconque des revendications 1 à 17 dans lequel le biscuit est un biscuit tendre et lesdits morceaux sont formés par extrusion verticale suivie d'un découpage.

23. Un procédé comme revendiqué dans la revendication 21 ou 22 dans lequel lesdits morceaux sont découpés essentiellement perpendiculairement à la direction d'écoulement de la pâte extrudée.

24. Un procédé comme revendiqué dans l'une quelconque des revendications précédentes dans lequel lesdits morceaux sont séchés pour obtenir un biscuit ayant une activité hydrique de 0,70 ou moins.

25. Un procédé comme revendiqué dans la revendication 24 dans lequel l'activité hydrique de ladite pâte pour biscuit est d'au moins 0,90.

26. Un procédé comme revendiqué dans la revendication 24 ou 25 dans lequel lesdites particules du stade (a) sont stables au stockage.

27. Un procédé comme revendiqué dans la revendication 25 dans lequel le biscuit est un biscuit dur et la quantité des dites particules dans le biscuit est de 3% à 15% du poids du biscuit.

28. Un procédé comme revendiqué dans la revendication 25 dans lequel le biscuit est un biscuit tendre et la quantité desdites particules dans le biscuit est de 3% à 25% du poids du biscuit.

29. Un procédé comme revendiqué dans les revendications 24, 25, 26 ou 28 dans lequel le biscuit est un biscuit tendre, et un humectant et ladite eau sont mélangés avec ledit mélange mélangé à sec pour former ladite pâte du stade (b).

30. Un procédé comme revendiqué dans la revendication 25 ou 29 dans lequel ladite eau et ladite portion de graisse dans les stades (b) et (c) sont ajoutées simultanément aun mélange mélangé à sec du stade (a).

31. Un procédé comme revendiqué dans l'une quelconque des revendications 24 à 30 dans lequel lesdites particules ont une teneur en protéine d'au moins 20% en poids, ladite protéine étant dénaturée.

32. Un procédé comme revendiqué dans l'une quelconque des revendications précédentes dans lequel le biscuit sec, dur ou tendre pour chiens a des particules de viande et/ou de sous-produits de la viande qui apparaissent visuellement sous forme de particules discrètes.

33. Un procédé comme revendiqué dans l'une quelconque des revendications précédentes dans lequel ladite pâte finale est formée à une pression inférieure à 75 psig ($5 \times 10^5$ N.m$^{-2}$) et une température allant jusqu'à 110°F (43°C).

34. Un biscuit sec, dur ou tendre pour chiens comprenant des particules de viande et/ou des sous-produits de la viande déshydratées visuellement apparentes distribuées essentiellement uniformément dans ledit biscuit, la portion restante dudit biscuit étant essentiellement dépourvue de couleur des particules de viande, ledit biscuit ayant une activité hydrique de 0,70 ou moins.

35. Un biscuit pour chiens comme revendiqué dans la revendication 34 dans lequel lesdites particules sont des particules de viande séchée déshydratée et épicée.

36. Un biscuit pour chiens comme revendiqué dans la revendication 34 ou 35 où le biscuit est un biscuit dur et le pourcentage pondéral desdites particules est de 3% à 15% du poids du biscuit.

37. Un biscuit pour chiens comme revendiqué dans la revendication 34 ou 35 où le biscuit est un biscuit tendre et le pourcentage pondéral desdites particules est de 3% à 25% du poids du biscuit.

38. Un biscuit pour chiens comme revendiqué dans l'une quelconque des revendications 34, 35 ou 37 où le biscuit est un biscuit tendre et a une forme cylindrique.

39. Un biscuit pour chiens comme revendiqué dans l'une quelconque des revendications 34 à 38 où lesdites particules ont une granulométrie de 1/32 inch (0,8 mm) à 1/2 inch (13 mm).